# EUROPÄISCHE PATENTSCHRIFT

(11) **EP 3 191 281 B1**
(45) Veröffentlichungstag und Bekanntmachung des Hinweises auf die Patenterteilung: **12.03.2025**
(21) Anmeldenummer: 15759741.0
(22) Anmeldetag: 02.09.2015
(51) Int. Cl.: B28D 1/04, B28D 7/00

(54) **VERFAHREN ZUR STEUERUNG EINES WANDSÄGESYSTEMS BEIM ERSTELLEN EINES TRENNSCHNITTES**
METHOD FOR CONTROLLING A WALL SAW SYSTEM WHEN CREATING A SEPARATING CUT
PROCÉDÉ DE COMMANDE D'UN SYSTÈME DE SCIE MURALE PAR SCIAGE EN LONG

(30) Priorität: 08.09.2014 EP 14003104
(43) Veröffentlichungstag der Anmeldung: 19.07.2017
(73) Patentinhaber: Hilti Aktiengesellschaft, 9494 Schaan (LI)
(72) Erfinder: BEREUTER, Christian, A-6951 Lingenau (AT); STEVIC, Dragan, A-6800 Feldkirch-Tosters (AT); KANEIDER, Wilfried, A-6830 Rankweil (AT)
(74) Vertreter: Hilti Aktiengesellschaft Corporate Intellectual Property
(86) Internationale Anmeldenummer: PCT/EP2015/070043
(87) Internationale Veröffentlichungsnummer: WO 2016/037915

(56) Entgegenhaltungen:
- EP-B1- 1 693 173
- WO-A1-2014/124912
- DE-A1- 102013 202 445

## Beschreibung

### Technisches Gebiet

Die vorliegende Erfindung betrifft ein Verfahren zur Steuerung eines Wandsägesystems beim Erstellen eines Trennschnittes gemäß dem Oberbegriff des Anspruchs 1.

### Stand der Technik

Beispiele von Wandsägesysteme sind aus der DE 10 2013 202445 A1 oder WO 2014/124912 A1 bekannt.

Aus EP 1 693 173 B1 ist ein Verfahren zur Steuerung eines Wandsägesystems beim Erstellen eines Trennschnittes in einem Werkstück zwischen einem ersten Endpunkt und einem zweiten Endpunkt bekannt. Das Wandsägesystem umfasst eine Führungsschiene und eine Wandsäge mit einem Sägekopf, einer motorischen Vorschubeinheit, die den Sägekopf parallel zu einer Vorschubrichtung entlang der Führungsschiene verschiebt und mindestens einem Sägeblatt, das an einem Sägearm des Sägekopfes befestigt und von einem Antriebsmotor um eine Drehachse angetrieben wird. Der Sägearm ist mittels eines Schwenkmotors um eine Schwenkachse schwenkbar ausgebildet. Durch eine Schwenkbewegung des Sägearms um die Schwenkachse wird die Eindringtiefe des Sägeblattes in das Werkstück verändert. Die motorische Vorschubeinheit umfasst einen Führungsschlitten und einen Vorschubmotor, wobei der Sägekopf auf dem Führungsschlitten angebracht und über den Vorschubmotor entlang der Führungsschiene verschoben wird. Zur Überwachung des Wandsägesystems ist eine Sensoreinrichtung mit einem Schwenkwinkelsensor und einem Wegsensor vorgesehen. Der Schwenkwinkelsensor misst den momentanen Schwenkwinkel des Sägearms und der Wegsensor misst die aktuelle Position des Sägekopfes auf der Führungsschiene. Die gemessenen Werte für den aktuellen Schwenkwinkel des Sägearms und die aktuelle Position des Sägekopfes werden regelmäßig an eine Kontrolleinheit der Wandsäge übermittelt.

Das bekannte Verfahren zur Steuerung eines Wandsägesystems ist in einen Vorbereitungsteil und eine, von der Kontrolleinheit gesteuerten Bearbeitung des Trennschnittes unterteilt. Im Vorbereitungsteil legt der Bediener zumindest den Sägeblattdurchmesser des Sägeblattes, die Positionen des ersten und zweiten Endpunktes in Vorschubrichtung und die Endtiefe des Trennschnittes fest; weitere Parameter können das Material des zu bearbeitenden Werkstückes und die Abmessungen von eingebetteten Armierungseisen sein. Aus den eingegebenen Parametern bestimmt die Kontrolleinheit für den Trennschnitt eine geeignete Hauptschnittfolge von Hauptschnitten, wobei die Hauptschnittfolge zumindest einen ersten Hauptschnitt mit einem ersten Hauptschnittwinkel des Sägearms und einem ersten Durchmesser des verwendeten Sägeblattes sowie einen folgenden zweiten Hauptschnitt mit einem zweiten Hauptschnittwinkel des Sägearms und einem ersten Durchmesser des verwendeten Sägeblattes umfasst.

Das bekannte Verfahren zur Steuerung eines Wandsägesystems hat den Nachteil, dass keine Details zur Überschnittbearbeitung eines freien Endpunktes mit Überschneiden offenbart sind.

### Darstellung der Erfindung

Die Aufgabe der vorliegenden Erfindung besteht darin, ein Verfahren zur Steuerung eines Wandsägesystems zu entwickeln, bei dem die Überschnittbearbeitung eines freien Endpunktes gesteuert von der Kontrolleinheit der Wandsäge durchgeführt wird und die Bearbeitungsparameter der Wandsäge an die Überschnittbearbeitung angepasst werden.

Diese Aufgabe wird bei dem eingangs genannten Verfahren zur Steuerung eines Wandsägesystems erfindungsgemäß durch die Merkmale des unabhängigen Anspruchs gelöst. Vorteilhafte Weiterbildungen sind in den abhängigen Ansprüchen angegeben.

Erfindungsgemäß ist vorgesehen, dass während der von der Kontrolleinheit gesteuerten Bearbeitung die Überschnittfolge zwischen dem vorletzten Hauptschnitt und letzten Hauptschnitt durchgeführt wird oder die Überschnittfolge nach dem letzten Hauptschnitt durchgeführt wird und vor dem Start der von der Kontrolleinheit gesteuerten Bearbeitung für die Überschnittfolge zusätzlich eine Anfangsposition und eine Endposition festgelegt werden. Dadurch, dass für die Überschnittbearbeitung eine eigene Überschnittfolge definiert wird, können die Bearbeitungsparameter an die Überschnittbearbeitung angepasst werden.

Bevorzugt umfasst die Überschnittfolge eine Anzahl von n Überschnitten mit j-ten Überschnittwinkeln des Sägearms und j-ten Durchmessern des verwendeten Sägeblattes, j = 1 bis n. Die Anzahl der Überschnitte, die notwendig ist, hängt unter anderem von der Spezifikation des Sägeblattes, den Werkstoffeigenschaften des Werkstückes sowie der Leistung und dem Drehmoment des Antriebsmotors für das Sägeblatt ab. Die Überschnittwinkel können vom Bediener festgelegt werden oder die Kontrolleinheit des Wandsägesystems legt die Überschnittwinkel abhängig von verschiedenen Randbedingungen fest. Für das erfindungsgemäße Verfahren stellen die Überschnittwinkel eine Eingangsgröße dar, die zur Steuerung der Wandsäge genutzt wird.

Bevorzugt werden vor dem Start der von der Kontrolleinheit gesteuerten Bearbeitung zusätzlich eine Sägearmlänge des Sägearms, die als Abstand zwischen der Schwenkachse des Sägearms und der Drehachse des Sägeblattes definiert ist, und ein Abstand zwischen der Schwenkachse und einer Oberseite des Werkstückes festgelegt. Für eine gesteuerte Bearbeitung eines Trennschnittes müssen der Kontrolleinheit verschiedene Parameter bekannt sein. Dazu gehören die Sägearmlänge, die eine feste gerätespezifische Größe der Wandsäge darstellt, und der senkrechte Abstand zwischen der Schwenkachse und der Oberfläche des Werkstückes, die neben der Geometrie der Wandsäge auch von der Geometrie der verwendeten Führungsschiene abhängt.

In einer ersten Ausführung ist der erste Endpunkt des Trennschnittes als freier Endpunkt mit Überschneiden definiert. Für die Überschnittfolge wird von der Kontrolleinheit eine erste Endposition berechnet, wobei die Schwenkachse in der ersten Endposition eine Ortskoordinate von X(E₁) + √[Δh·(Dₘ - Δh)] - δ · sin(±αₘ) aufweist, wobei Δh = (hₘ - T) die Differenz zwischen der Eindringtiefe beim letzten Hauptschnittwinkel und der Endtiefe und hₘ = h(±αₘ, Dₘ) = Dₘ/2 - Δ - δ · cos(±αₘ) die Eindringtiefe des verwendeten Sägeblattes in das Werkstück beim letzten Hauptschnittwinkel bezeichnen. Wenn die Schwenkachse die erste Endposition erreicht hat, ist das Material am ersten Endpunkt vollständig abgetragen und der Trennschnitt im Bereich des freien ersten Endpunktes fertiggestellt.

In einer Weiterentwicklung der ersten Ausführung werden im j-ten Überschnitt der Überschnittfolge, j = 1 bis n der Sägekopf in eine erste Anfangsposition positioniert, der Sägearm in der ersten Anfangsposition in den j-ten Überschnittwinkel geschwenkt und der Sägekopf mit dem, im j-ten Überschnittwinkel, geneigten Sägearm in die erste Endposition verfahren.

Besonders bevorzugt weist die Schwenkachse in der ersten Anfangsposition eine Ortskoordinate von X(E₁) + √[h(±ϕ_{1,n}) · (D_{1,n} - h(±ϕ_{1,n)})] - δ · sin(±ϕ_{1,n}) für 0° < ϕ₁ₙ ≤ 90° und X(E₁) + √[h(±ϕ_{1,n}) · (D₁ₙ - h(±ϕ_{1,n)})] - δ · sin(±90°) für 90° < ϕ₁ₙ ≤ 180° auf, wobei h(±ϕ_{1,n}, D_{1,n}) = D₁ₙ/2 - Δ - δ · cos(±ϕ_{1,n}) die Eindringtiefe des verwendeten Sägeblattes in das Werkstück beim n-ten Überschnittwinkel (±ϕ_{1,n}) bezeichnet. Die erste Anfangsposition stellt sicher, dass die Schwenkbewegung in alle Überschnittwinkel der Überschnittfolge vor dem ersten Endpunkt erfolgt und der erste Endpunkt überschritten wird.

In einer zweiten Ausführung ist der zweite Endpunkt als freier Endpunkt mit Überschneiden definiert. Für die Überschnittfolge wird von der Kontrolleinheit eine zweite Endposition berechnet, wobei die Schwenkachse in der zweiten Endposition eine Ortskoordinate von X(E₂) - √[Δh · (Dₘ - Δh)] + δ · sin(±αₘ) aufweist, wobei Δh = (hₘ - T) die Differenz zwischen der Eindringtiefe hₘ beim letzten Hauptschnittwinkel und der Endtiefe T und hₘ = h(±αₘ, Dₘ) = Dₘ/2 - Δ - δ · cos(±αₘ) die Eindringtiefe des Sägeblattes in das Werkstück beim letzten Hauptschnittwinkel bezeichnen. Wenn die Schwenkachse die zweite Endposition erreicht hat, ist das Material am zweiten Endpunkt vollständig abgetragen und der Trennschnitt im Bereich des freien zweiten Endpunktes fertiggestellt.

In einer Weiterentwicklung der zweiten Ausführung werden im j-ten Überschnitt der Überschnittfolge, j = 1 bis n der Sägekopf in eine zweite Anfangsposition positioniert, der Sägearm in der zweiten Anfangsposition in den j-ten Überschnittwinkel geschwenkt und der Sägekopf mit dem, im j-ten Überschnittwinkel, geneigten Sägearm in die zweite Endposition verfahren.

Besonders bevorzugt weist die Schwenkachse in der zweiten Anfangsposition eine Ortskoordinate von X(E₂) - √[h(±ϕ_{2,n}) · (D_{2,n} - h(±ϕ_{2,n}))] - δ · sin(±ϕ_{2,n}) für 0° < ϕ_{2,n} ≤ 90° und X(E₂) - √[h(±ϕ_{2,n}) · (D_{2,n} - h(±ϕ_{2,n}))] - δ · sin(±90°) für 90° < ϕ_{2,n} ≤ 180° auf, wobei h(±ϕ_{2,n}, D_{2,n}) = D_{2,n}/2 - Δ - δ · cos(±ϕ_{2,n}) die Eindringtiefe des verwendeten Sägeblattes in das Werkstück beim n-ten Überschnittwinkel (±ϕ_{2,n}) bezeichnet. Die zweite Anfangsposition stellt sicher, dass die Schwenkbewegung in alle Überschnittwinkel der Überschnittfolge vor dem zweiten Endpunkt erfolgt und der zweite Endpunkt nicht überschritten wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Wandsägesystem mit einer Führungsschiene und einer Wandsäge;
- FIGN. 2A, B: die Bearbeitung eines Trennschnittes zwischen einem ersten und zweiten freien Endpunkt ohne Hindernis;
- FIGN. 3A, B: die Bearbeitung eines Trennschnittes zwischen einem ersten und zweiten Hindernis mit einem Sägeblatt, das nicht von einem Blattschutz umgeben ist;
- FIGN. 4A, B: die Bearbeitung eines Trennschnittes zwischen einem ersten und zweiten Hindernis mit einem Sägeblatt, das von einem Blattschutz umgeben ist;
- FIGN. 5A-T: das Wandsägesystem der FIG. 1 bei Erstellen eines Trennschnittes zwischen einem ersten freien Endpunkt ohne Hindernis und einem zweiten freien Endpunkt ohne Hindernis.

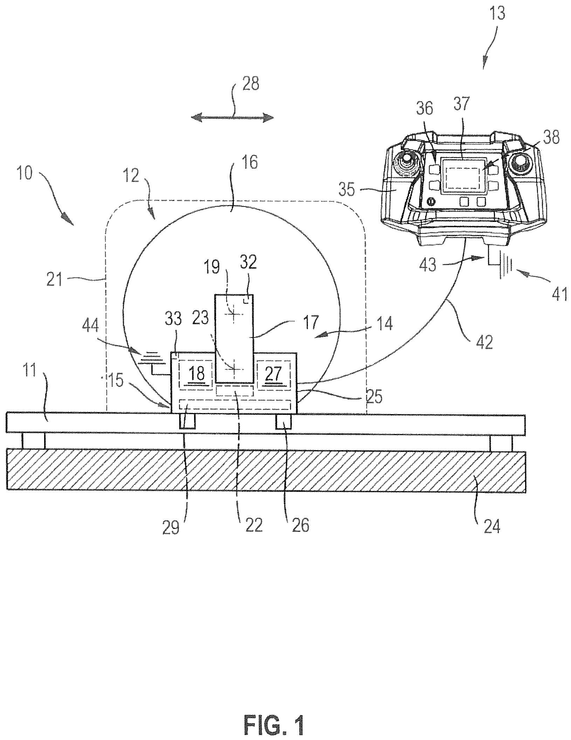

**FIG. 1** zeigt ein Wandsägesystem **10** mit einer Führungsschiene **11,** einem, an der Führungsschiene 11 verschiebbar angeordneten, Werkzeuggerät **12** und einer Fernbedienung **13.** Das Werkzeuggerät ist als Wandsäge 12 ausgebildet und umfasst eine Bearbeitungseinheit **14** und eine motorische Vorschubeinheit **15.** Die Bearbeitungseinheit ist als Sägekopf 14 ausgebildet und umfasst ein als Sägeblatt ausgebildetes Bearbeitungswerkzeug **16,** das an einem Sägearm **17** befestigt ist und von einem Antriebsmotor **18** um eine Drehachse **19** angetrieben wird.

11Zum Schutz des Bedieners ist das Sägeblatt 16 von einem Blattschutz **21** umgeben, der mittels eines Blattschutzhalters am Sägearm 17 befestigt wird. Der Sägearm 17 ist von einem Schwenkmotor **22** um eine Schwenkachse **23** schwenkbar ausgebildet. Der Schwenkwinkel **a** des Sägearms 17 bestimmt mit einem Sägeblattdurchmesser **D** des Sägeblattes 16, wie tief das Sägeblatt 16 in ein zu bearbeitendes Werkstück **24** eintaucht. Der Antriebsmotor 18 und der Schwenkmotor 22 sind in einem Gerätegehäuse **25** angeordnet. Die motorische Vorschubeinheit 15 umfasst einen Führungsschlitten **26** und einen Vorschubmotor **27,** der im Ausführungsbeispiel ebenfalls im Gerätegehäuse 25 angeordnet ist. Der Sägekopf 14 ist auf dem Führungsschlitten 26 befestigt und über den Vorschubmotor 27 entlang der Führungsschiene 11 in einer Vorschubrichtung **28** verschiebbar ausgebildet. Im Gerätegehäuse 25 ist neben den Motoren 19, 22, 27 eine Kontrolleinheit **29** zur Steuerung des Sägekopfes 14 und der motorischen Vorschubeinheit 15 angeordnet.

Zur Überwachung des Wandsägesystems 10 und des Bearbeitungsprozesses ist eine Sensoreinrichtung mit mehreren Sensorelementen vorgesehen. Ein erstes Sensorelement **32** ist als Schwenkwinkelsensor und ein zweites Sensorelement **33** als Wegsensor ausgebildet. Der Schwenkwinkelsensor 32 misst den aktuellen Schwenkwinkel des Sägearms 17 und der Wegsensor 33 misst die aktuelle Position des Sägekopfes 14 auf der Führungsschiene 11. Die Messgrößen werden vom Schwenkwinkelsensor 32 und Wegsensor 33 an die Kontrolleinheit 29 übermittelt und zur Steuerung der Wandsäge 12 herangezogen.

Die Fernbedienung 13 umfasst ein Gerätegehäuse **35,** eine Eingabeeinrichtung **36,** eine Anzeigeeinrichtung **37** und eine Kontrolleinheit **38,** die im Inneren des Gerätegehäuses 35 angeordnet ist. Die Kontrolleinheit 38 wandelt die Eingaben der Eingabeeinrichtung 36 in Steuerbefehle und Daten um, die über eine erste Kommunikationsverbindung an die Wandsäge 12 übermittelt werden. Die erste Kommunikationsverbindung ist als draht- und kabellose Kommunikationsverbindung **41** oder als Kommunikationskabel **42** ausgebildet. Die draht- und kabellose Kommunikationsverbindung ist im Ausführungsbeispiel als Funkverbindung 41 ausgebildet, die zwischen einer ersten Funkeinheit **43** an der Fernbedienung 13 und einer zweiten Funkeinheit **44** am Werkzeuggerät 12 entsteht. Alternativ kann die draht- und kabellose Kommunikationsverbindung 41 in Form einer Infrarot-, Bluetooth-, WLAN- oder Wi-Fi-Verbindung ausgebildet sein.

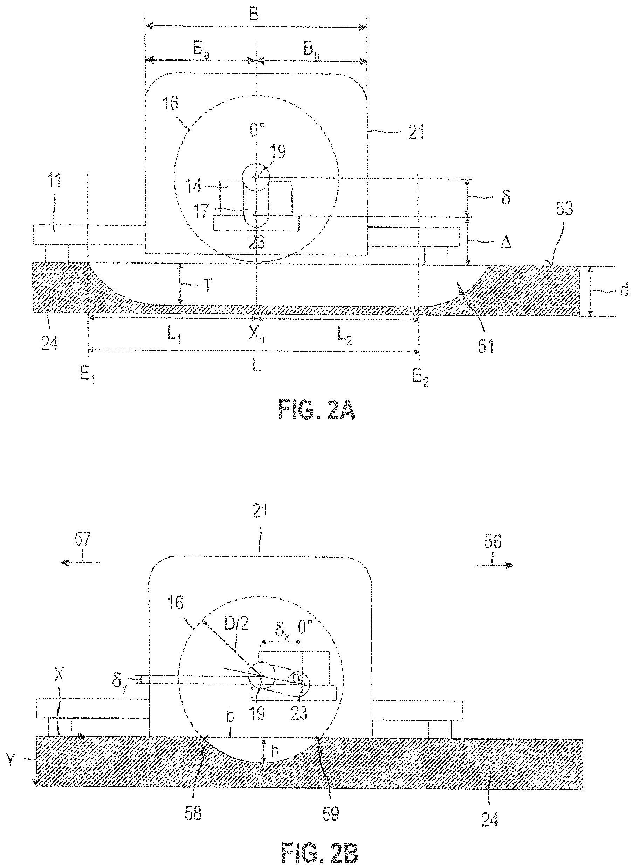

**FIGN. 2A****, B** zeigen die Führungsschiene 11 und die Wandsäge 12 des Wandsägesystems 10 der FIG. 1 beim Erstellen eines Trennschnittes **51** im Werkstück 24 der Werkstückdicke **d.** Der Trennschnitt 51 weist eine Endtiefe **T** auf und verläuft in Vorschubrichtung 28 zwischen einem ersten Endpunkt **E₁** und einem zweiten Endpunkt **E₂.** Als **X**-Richtung ist eine Richtung parallel zur Vorschubrichtung 28 definiert, wobei die positive X-Richtung vom ersten Endpunkt E₁ zum zweiten Endpunkt E₂ gerichtet ist, und als **Y**-Richtung ist eine Richtung senkrecht zur X-Richtung in die Tiefe des Werkstückes 24 definiert.

Der Endpunkt eines Trennschnittes kann als freier Endpunkt ohne Hindernis oder als Hindernis definiert sein. Dabei können beide Endpunkte als freie Endpunkte ohne Hindernis, beide Endpunkte als Hindernis oder ein Endpunkt als freier Endpunkt und der andere Endpunkt als Hindernis definiert sein. An einem freien Endpunkt ohne Hindernis kann ein Überschneiden erlaubt sein. Durch das Überschneiden erreicht die Schnitttiefe am Endpunkt die Endtiefe T des Trennschnittes. Im Ausführungsbeispiel der FIGN. 2A, B bilden die Endpunkte E₁, E₂ freie Endpunkte ohne Hindernis, wobei am freien ersten Endpunkt E₁ ein Überschneiden nicht zulässig ist und am zweiten Endpunkt E₂ ein Überschneiden erfolgt ist.

FIG. 2A zeigt den Sägekopf 14 in einer Montageposition **X₀** und den Sägearm 17 in einer Grundposition von 0°. Der Sägekopf 14 wird vom Bediener mittels des Führungsschlittens 26 in der Montageposition X₀ auf der Führungsschiene 11 positioniert. Die Montageposition X₀ des Sägekopfes 14 liegt zwischen dem ersten und zweiten Endpunkt E₁, E₂ und ist durch die Position der Schwenkachse 23 in Vorschubrichtung 28 bestimmt. Die Position der Schwenkachse 23 eignet sich besonders als Referenzposition **X_{Ref}** für die Positionsüberwachung des Sägekopfes 14 und die Steuerung der Wandsäge 12, da die X-Position der Schwenkachse 23 auch während der Schwenkbewegung des Sägearms 17 unverändert bleibt. Alternativ kann eine andere X-Position am Sägekopf 14 als Referenzposition festgelegt werden, wobei in diesem Fall zusätzlich der Abstand in X-Richtung zur Schwenkachse 23 bekannt sein muss.

Die X-Positionen des ersten und zweiten Endpunktes E₁, E₂ sind im Ausführungsbeispiel durch die Eingabe von Teillängen festgelegt. Der Abstand zwischen der Montageposition **X₀** und dem ersten Endpunkt E₁ bestimmt eine erste Teillänge **L₁** und der Abstand zwischen der Montageposition **X₀** und dem zweiten Endpunkt E₂ eine zweite Teillänge **L₂.** Alternativ können die X-Positionen der Endpunkte E₁, E₂ durch die Eingabe einer Teillänge (L₁ oder L₂) und einer Gesamtlänge **L** als Abstand zwischen den Endpunkten E₁, E₂ festgelegt werden.

Der Trennschnitt 51 wird in mehreren Teilschnitten erstellt, bis die gewünschte Endtiefe T erreicht ist. Die Teilschnitte zwischen dem ersten und zweiten Endpunkt E₁, E₂ werden als Hauptschnitte definiert und die Schnittfolge der Hauptschnitte als Hauptschnittfolge. An den Endpunkten des Trennschnittes kann eine zusätzliche Eckenbearbeitung durchgeführt werden, die bei einem Hindernis als Hindernisbearbeitung und bei einem freien Endpunkt mit Überschneiden als Überschnittbearbeitung bezeichnet wird.

Die Hauptschnittfolge kann vom Bediener festgelegt werden oder die Kontrolleinheit des Wandsägesystems legt die Hauptschnittfolge abhängig von mehreren Randbedingungen fest. Üblicherweise wird der erste Hauptschnitt, der auch als Vorschnitt bezeichnet wird, mit einer reduzierten Schnitttiefe und einer reduzierten Leistung des Antriebsmotors ausgeführt, um ein Polieren des Sägeblattes zu verhindern. Die weiteren Hauptschnitte werden in der Regel mit der gleichen Schnitttiefe ausgeführt, können aber auch unterschiedliche Schnitttiefen aufweisen. Zu den Randbedingungen, die von einem Bediener üblicherweise festgelegt werden, gehören die Schnitttiefe des Vorschnittes, die Leistung des Vorschnittes und die maximale Schnitttiefe der weiteren Hauptschnitte. Aus diesen Randbedingungen kann die Kontrolleinheit die Hauptschnittfolge bestimmen.

Die Hauptschnitte eines Trennschnittes werden mit einem Sägeblattdurchmesser oder mit zwei oder mehr Sägeblattdurchmessern durchgeführt. Wenn mehrere Sägeblätter eingesetzt werden, beginnt die Bearbeitung in der Regel mit dem kleinsten Sägeblattdurchmesser. Um das Sägeblatt 16 am Sägearm 17 montieren zu können, muss das Sägeblatt 16 in der Grundposition des Sägearms 17 oberhalb des Werkstückes 24 angeordnet sein. Ob diese Randbedingung erfüllt ist, hängt von zwei gerätespezifischen Größen des Wandsägesystems 10 ab, zum einen von einem senkrechten Abstand **Δ** zwischen der Schwenkachse 23 des Sägearms 17 und einer Oberseite **53** des Werkstückes 24 und zum anderen von einer Sägearmlänge **δ** des Sägearms 17, die als Abstand zwischen der Drehachse 19 des Sägeblattes 16 und der Schwenkachse 23 des Sägearms 17 definiert ist. Wenn die Summe dieser beiden gerätespezifischen Größen grösser als der halbe Sägeblattdurchmesser D/2 ist, ist das Sägeblatt 16 in der Grundposition oberhalb des Werkstückes 24 angeordnet. Die Sägearmlänge δ ist eine feste gerätespezifische Größe der Wandsäge 12, wohingegen der senkrechte Abstand Δ zwischen der Schwenkachse 23 und der Oberfläche 53 neben der Geometrie der Wandsäge 12 auch von der Geometrie der verwendeten Führungsschiene 11 abhängt.

Das Sägeblatt 16 ist auf einem Flansch am Sägearm 17 befestigt und wird im Sägebetrieb vom Antriebsmotor 18 um die Drehachse 19 angetrieben. In der Grundposition des Sägearms 17, die in FIG. 2A dargestellt ist, beträgt der Schwenkwinkel 0° und die Drehachse 19 des Sägeblattes 16 liegt in Tiefenrichtung 52 oberhalb der Schwenkachse 23. Das Sägeblatt 16 wird durch eine Schwenkbewegung des Sägearms 17 um die Schwenkachse 23 aus der Grundposition bei 0° in das Werkstück 24 hineinbewegt. Während der Schwenkbewegung des Sägearms 17 wird das Sägeblatt 16 vom Antriebsmotor 18 um die Drehachse 19 angetrieben.

Zum Schutz des Bedieners soll das Sägeblatt 16 während des Betriebes vom Blattschutz 21 umgeben sein. Die Wandsäge 12 wird mit Blattschutz 21 oder ohne Blattschutz 21 betrieben. Zur Bearbeitung des Trennschnittes im Bereich der Endpunkte E₁, E₂ kann beispielsweise eine Demontage des Blattschutzes 21 vorgesehen sein. Wenn zur Bearbeitung des Trennschnittes verschiedene Sägeblattdurchmesser eingesetzt werden, werden in der Regel auch verschiedene Blattschutze mit entsprechenden Blattschutzbreiten eingesetzt.

FIG. 2B zeigt den Sägearm 17, der in einer negativen Drehrichtung **54** unter einem negativen Schwenkwinkel -α geneigt ist. Der Sägearm 17 ist in der negativen Drehrichtung 54 zwischen Schwenkwinkeln von 0° bis -180° verstellbar und in einer, zur negativen Drehrichtung 54 entgegen gerichteten, positiven Drehrichtung **55** zwischen Schwenkwinkeln von 0° bis +180° verstellbar. Die in FIG. 2B dargestellte Anordnung des Sägearms 17 wird als ziehende Anordnung bezeichnet, wenn der Sägekopf 14 in eine positive Vorschubrichtung **56** bewegt wird. Wird der Sägekopf 14 in eine, zur positiven Vorschubrichtung 56 entgegen gerichtete, negative Vorschubrichtung **57** bewegt, wird die Anordnung des Sägearms 17 als stoßende Anordnung bezeichnet.

Bei einem Schwenkwinkel von ±180° wird die maximale Eindringtiefe des Sägeblattes 16 in das Werkstück 24 erreicht. Durch die Schwenkbewegung des Sägearms 17 um die Schwenkachse 23 wird die Position der Drehachse 19 in X-Richtung und in **Y**-Richtung verschoben. Dabei ist die Verschiebung der Drehachse 19 von der Sägearmlänge δ und dem Schwenkwinkel α des Sägearms 17 abhängig. Der Verschiebeweg **δₓ** in X-Richtung beträgt δ . sin(±α) und der Verschiebeweg **δ_{y}** in **Y**-Richtung beträgt δ · cos(±α).

Das Sägeblatt 16 erzeugt im Werkstück 24 einen Schneidkeil in Form eines Kreissegmentes mit einer Höhe **h** und einer Breite **b.** Die Höhe h des Kreissegmentes entspricht der Eindringtiefe des Sägeblattes 16 in das Werkstück 24. Für die Eindringtiefe h gilt der Zusammenhang D/2 = h + Δ + δ · cos(α), wobei D den Sägeblattdurchmesser, h die Eindringtiefe des Sägeblattes 16, Δ den senkrechten Abstand zwischen der Schwenkachse 23 und der Oberseite 53 des Werkstückes 24, δ die Sägearmlänge und α den ersten Schwenkwinkel bezeichnen, und für die Breite b gilt der Zusammenhang b² = D/2 · 8h - 4h² = 4Dh - 4h² = 4h · (D - h), wobei h die Eindringtiefe des Sägeblattes 16 in das Werkstück 24 und D den Sägeblattdurchmesser bezeichnen.

Die Steuerung der Wandsäge 12 während des Trennschnittes ist davon abhängig, ob die Endpunkte als Hindernisse definiert sind, und bei einem Hindernis, ob die Bearbeitung mit Blattschutz 21 oder ohne Blattschutz 21 erfolgt. Bei einem freien Endpunkt ohne Hindernis erfolgt die Steuerung der Wandsäge 12 beim erfindungsgemäßen Verfahren über obere Austrittspunkte des Sägeblattes 16 an der Oberseite 53 des Werkstückes 24. Die oberen Austrittspunkte des Sägeblattes 16 lassen sich aus der Referenzposition X_{Ref} der Schwenkachse 23 in X-Richtung, dem Verschiebeweg δₓ der Drehachse 19 in X-Richtung und der Breite b berechnen. Ein, dem ersten Endpunkt E₁ zugewandter, oberer Austrittspunkt wird als erster oberer Austrittspunkt **58** bezeichnet und ein, dem zweiten Endpunkt E₂ zugewandter, oberer Austrittspunkt als zweiter oberer Austrittspunkt **59.** Für den ersten oberen Austrittspunkt 58 gilt X(58) = X_{Ref} + δ_{X} - b/2 und für den zweiten oberen Austrittspunkt 59 gilt X(59) = X_{Ref} + δ_{X} + b/2 mit b = √[h · (D - h)] und h = h(α, D).

Wenn die Endpunkte E₁, E₂ als Hindernisse definiert sind, ist ein Überfahren der Endpunkte E₁, E₂ mit der Wandsäge 12 nicht möglich. In diesem Fall erfolgt die Steuerung der Wandsäge 12 beim erfindungsgemäßen Verfahren über die Referenzposition X_{Ref} der Schwenkachse 23 und die Begrenzung der Wandsäge 12. Dabei wird zwischen einer Bearbeitung ohne Blattschutz 21 und einer Bearbeitung mit Blattschutz 21 unterschieden.

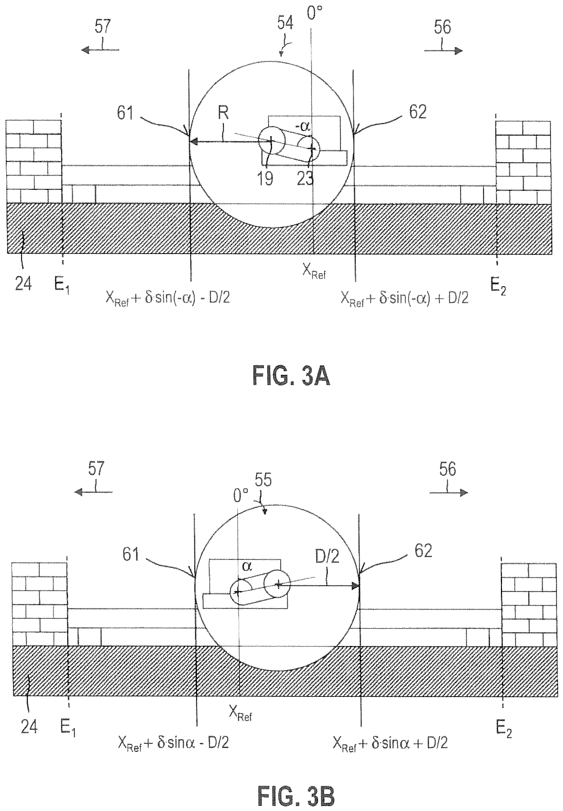

**FIGN. 3A****, B** zeigen das Wandsägesystem 10 beim Erstellen eines Trennschnittes zwischen dem ersten Endpunkt E₁ und dem zweiten Endpunkt E₂, die als Hindernisse definiert sind, wobei die Bearbeitung ohne Blattschutz 21 erfolgt. Bei der Bearbeitung ohne Blattschutz 21 bilden eine erste Sägeblattkante **61,** die dem ersten Endpunkt E₁ zugewandt ist, und eine zweite Sägeblattkante **62,** die dem zweiten Endpunkt E₂ zugewandt ist, die Begrenzung der Wandsäge 12.

Die X-Positionen der ersten und zweiten Sägeblattkante 61, 62 in X-Richtung lassen sich aus der Referenzposition X_{Ref} der Schwenkachse 23, dem Verschiebeweg δₓ der Drehachse 19 und dem Sägeblattdurchmesser D berechnen. FIG. 3A zeigt die Wandsäge 12 mit dem, in der negativen Drehrichtung 54 unter einem negativen Schwenkwinkel -α (0° bis -180°) geneigten Sägearm 17. Für die erste Sägeblattkante 61 gilt X(61) = X_{Ref} + δ · sin(-α) - D/2 und für die zweite Sägeblattkante 62 gilt X(62) = X_{Ref} + δ · sin(-α) + D/2. FIG. 3B zeigt die Wandsäge 12 mit dem, in der positiven Drehrichtung 55 unter einem positiven Schwenkwinkel α (0° bis + 180°), geneigten Sägearm 17. Für die erste Sägeblattkante 61 gilt X(61) = X_{Ref} + δ · sin(α) - D/2 und für die zweite Sägeblattkante 62 gilt X(62) = X_{Ref} + δ · sin(α) + D/2.

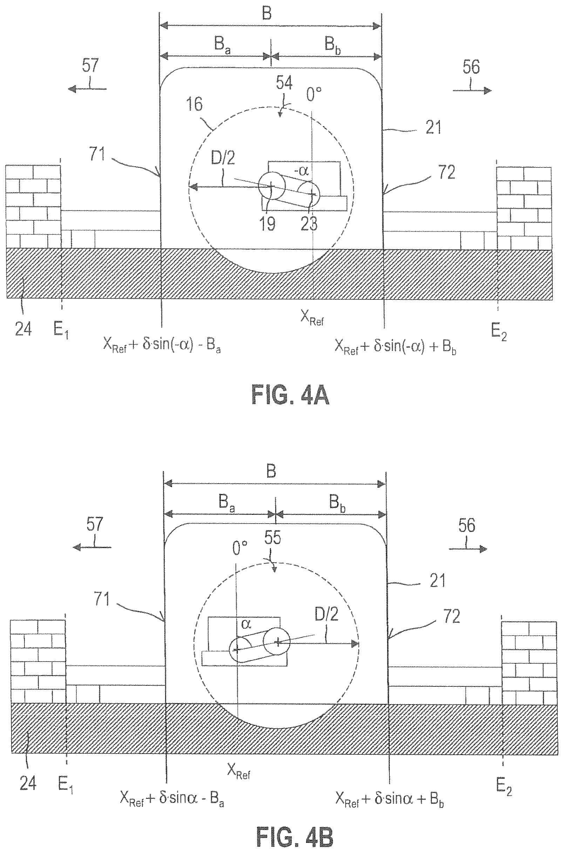

**FIGN. 4A****, B** zeigen das Wandsägesystem 10 beim Erstellen eines Trennschnittes zwischen dem ersten Endpunkt E₁ und dem zweiten Endpunkt E₂, die als Hindernisse definiert sind, wobei die Bearbeitung mit Blattschutz 21 erfolgt. Bei der Bearbeitung ohne Blattschutz 21 bilden eine erste Blattschutzkante **71,** die dem ersten Endpunkt E₁ zugewandt ist, und eine zweite Blattschutzkante **72,** die dem zweiten Endpunkt E₂ zugewandt ist, die Begrenzung der Wandsäge 12.

Die X-Positionen der ersten und zweiten Blattschutzkante 71, 72 in X-Richtung lassen sich aus der Referenzposition X_{Ref} der Schwenkachse 23, dem Verschiebeweg δₓ der Drehachse 19 und der Blattschutzbreite B berechnen. FIG. 4A zeigt die Wandsäge 12 mit dem, unter einem negativen Schwenkwinkel -α (0° bis -180°), geneigten Sägearm 17 und dem montierten Blattschutz 21 der Blattschutzbreite B. Bei einem asymmetrischen Blattschutz werden vor dem Start der gesteuerten Bearbeitung die Abstände der Drehachse 19 zu den Blattschutzkanten 71, 72 bestimmt, wobei der Abstand zur ersten Blattschutzkante 71 als erster Abstand **Bₐ** und der Abstand zur zweiten Blattschutzkante 72 als zweiter Abstand **B_{b}** bezeichnet werden.

Für die erste Blattschutzkante 71 gilt X(71) = X_{Ref} + δ · sin(α) - Bₐ und für die zweite Blattschutzkante 72 gilt X(72) = X_{Ref} + δ · sin(α) + B_{b}. FIG. 4B zeigt die Wandsäge 12 mit dem, unter einem positiven Schwenkwinkel α (0° bis + 180°), geneigten Sägearm 17 und dem montierten Blattschutz 21 der Blattschutzbreite B. Für die erste Blattschutzkante 71 gilt X(71) = X_{Ref} + δ · sin(α) - Bₐ und für die zweite Blattschutzkante 72 gilt X(72) = X_{Ref} + δ · sin(α) + B_{b}. FIGN. 2A, B zeigen einen Trennschnitt zwischen zwei Endpunkten E₁, E₂, die als freie Endpunkte ohne Hindernis definiert sind, und FIGN. 3A, B und 4A, B zeigen einen Trennschnitt zwischen zwei Endpunkten E₁, E₂, die als Hindernisse definiert sind. In der Praxis sind auch Trennschnitte möglich, bei denen ein Endpunkte als Hindernis definiert ist und der andere Endpunkt einen freien Endpunkt ohne Hindernis darstellt, wobei die Steuerung der Wandsäge beim freien Endpunkt über den oberen Austrittspunkt des Sägeblattes erfolgt und beim Hindernis über die Sägeblattkante (Bearbeitung ohne Blattschutz 21) oder die Blattschutzkante (Bearbeitung mit Blattschutz 21).

Der erste obere Austrittspunkt 58, die erste Sägeblattkante 61 und die erste Blattschutzkante 71 werden unter dem Begriff "erste Begrenzung" der Wandsäge 12 zusammengefasst und der zweite obere Austrittspunkt 59, die zweite Sägeblattkante 62 und die zweite Blattschutzkante 72 werden unter dem Begriff "zweite Begrenzung" zusammengefasst.

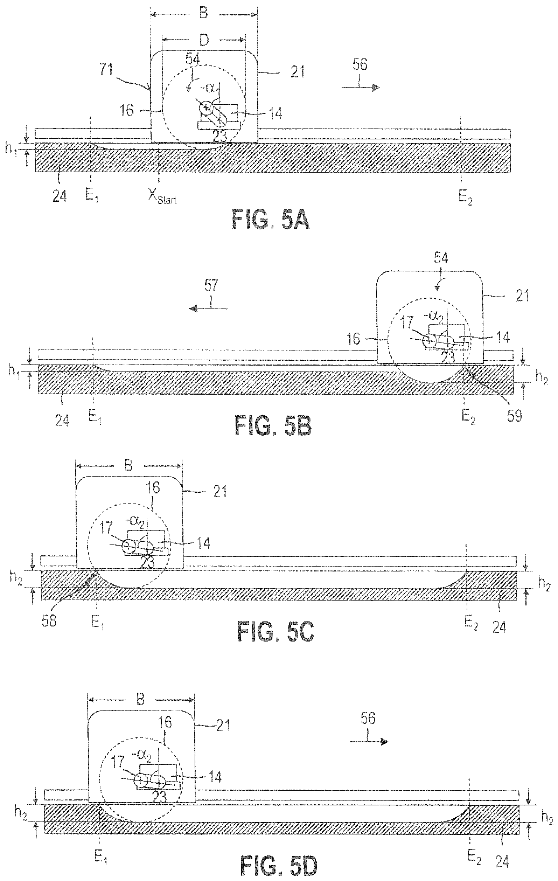

**FIGN. 5A-T** zeigen das Wandsägesystem 10 der FIG. 1 mit der Führungsschiene 11 und der Wandsäge 12 beim Erstellen eines Trennschnittes der Endtiefe T im Werkstück 24 zwischen dem ersten Endpunkt E₁, der als freier Endpunkt mit Überschneiden definiert ist, und dem zweiten Endpunkt E₂, der als freier Endpunkt mit Überschneiden definiert ist.

Der Trennschnitt umfasst eine Hauptschnittfolge von mehreren Hauptschnitten, die zwischen dem ersten Endpunkt E₁ und dem zweiten Endpunkt E₂ durchgeführt werden, eine erste Überschnittfolge für den freien ersten Endpunkt E₁ mit Überschneiden und eine zweite Überschnittfolge für den freien zweiten Endpunkt E₂ mit Überschneiden.

Die Hauptschnittfolge umfasst einen ersten Hauptschnitt mit einem ersten Hauptschnittwinkel **<1₁** des Sägearms 17, einem ersten Durchmesser **D₁** und einer ersten Eindringtiefe **h₁** des verwendeten Sägeblattes, einem zweiten Hauptschnitt mit einem zweiten Hauptschnittwinkel **α₂** des Sägearms 17, einem zweiten Durchmesser **D₂** und einer zweiten Eindringtiefe **h₂** des verwendeten Sägeblattes sowie einen dritten Hauptschnitt mit einem dritten Hauptschnittwinkel **α₃** des Sägearms 17, einem dritten Durchmesser **D₃** und einer dritten Eindringtiefe **h₃** des verwendeten Sägeblattes.

Der erste, zweite und dritte Hauptschnitt werden im Ausführungsbeispiel mit dem Sägeblatt 16 und dem zugehörigen Blattschutz 21 durchgeführt. Daher stimmen die Durchmesser D₁, D₂, D₃ der Hauptschnitte mit dem Sägeblattdurchmesser D des Sägeblattes 16 überein. Alternativ können die Hauptschnitte von mehreren Sägeblättern mit unterschiedlichen Sägeblattdurchmessern durchgeführt werden. Bei der Bearbeitung mit mehreren Sägeblättern umfasst das erfindungsgemäße Verfahren einen Verfahrensabschnitt zum Wechsel des Sägeblattes auf einen anderen Sägeblattdurchmesser.

Für die Bearbeitung der Hauptschnitte eignen sich drei Verfahrensvarianten, die sich voneinander hinsichtlich der Bearbeitungsqualität des Trennschnittes und der notwendigen Bearbeitungszeit unterscheiden; die Steuerung der Wandsäge bei der Ausführung der Hauptschnittfolge ist nicht Teil des erfindungsgemäßen Verfahrens. Abhängig von den Anforderungen an den Trennschnitt legt der Bediener vor dem Start der gesteuerten Bearbeitung fest, welche Verfahrensvariante für die Hauptschnittfolge genutzt wird. Bei der ersten Verfahrensvariante werden die Hauptschnitte mit einem ziehend angeordneten Sägearm 17 durchgeführt. Die ziehende Anordnung des Sägearms 17 ermöglicht eine stabile Führung des Sägeblattes 16 bei der Bearbeitung und einen schmalen Schnittspalt. Bei der zweiten und dritten Verfahrensvariante wird der Sägearm 17 abwechselnd ziehend und stoßend angeordnet, wobei der erste Hauptschnitt in ziehender Anordnung durchgeführt wird. Ein Trennschnitt, bei dem der Sägearm 17 abwechselnd ziehend und stoßend angeordnet wird, hat den Vorteil, dass die zum Positionieren des Sägekopfes 14 und Umschwenken des Sägearms 17 notwendigen Nebenzeiten gegenüber einer ziehenden Anordnung reduziert sind.

In jedem Hauptschnitt der ersten Verfahrensvariante folgen aufeinander ein Positionieren des Sägekopfes 14, eine Schwenkbewegung des Sägearms 17 in den Hauptschnittwinkel, ein Bearbeiten in einer ersten Vorschubrichtung, ein Anhalten des Sägekopfes 14, ein Umschwenken des Sägearms 17 in den negativen Hauptschnittwinkel und ein Bearbeiten des Hauptschnittes in einer zweiten, entgegen gerichteten Vorschubrichtung. In jedem Hauptschnitt der zweiten Verfahrensvariante folgen aufeinander ein Positionieren des Sägekopfes 14, eine Schwenkbewegung des Sägearms 17 in den Hauptschnittwinkel, ein Bearbeiten in einer Vorschubrichtung sowie ein Anhalten des Sägekopfes 14 in einer Position, in der der obere Austrittspunkt mit dem Endpunkt zusammenfällt. Die dritte Verfahrensvariante unterscheidet sich von der zweiten Verfahrensvariante dadurch, dass der letzte Verfahrensschritt eines Hauptschnittes (Anhalten) und der erste Verfahrensschritt des folgenden Hauptschnittes (Positionieren) zusammengefasst werden. Der Sägekopf 14 wird in einer Position angehalten, die so berechnet ist, dass der obere Austrittspunkt nach der Schwenkbewegung des Sägearms 17 in den Hauptschnittwinkel des folgenden Hauptschnittes mit dem Endpunkt zusammenfällt.

Im Ausführungsbeispiel werden die Hauptschnitte der Hauptschnittfolge mit einem Sägearm 17 durchgeführt, der abwechselnd ziehend und stoßend angeordnet wird. Die Bearbeitung des Trennschnittes beginnt am ersten Endpunkt E₁. Nach dem Start der gesteuerten Bearbeitung wird der Sägekopf 14 in eine Startposition **X_{Start}** positioniert, in der die Schwenkachse 23 einen Abstand von √[h₁ · (D₁ - h₁)] - δ · sin(-α₁) zum ersten Endpunkt E₁ aufweist, wobei h₁ = h(-α₁, D₁) = D₁/2 - Δ - δ · cos(-α₁) die Eindringtiefe des verwendeten Sägeblattes in das Werkstück 24 beim negativen ersten Hauptschnittwinkel -α₁ mit dem ersten Durchmesser D₁, der dem Sägeblattdurchmesser D entspricht, bezeichnet. In der Startposition X_{Start} wird der Sägearm 17 aus der Grundposition bei 0° in der negativen Drehrichtung 54 in den negativen ersten Hauptschnittwinkel -α₁ geschwenkt. Nach der Schwenkbewegung in den negativen ersten Hauptschnittwinkel -α₁ fällt der erste obere Austrittspunkt 58 des Sägeblattes 16 mit dem ersten Endpunkt E₁ zusammen.

Der Sägekopf 14 wird mit dem, unter dem negativen ersten Hauptschnittwinkel -α₁, geneigten Sägearm 17 und dem rotierenden Sägeblatt 16 in der positiven Vorschubrichtung 56 verfahren (FIG. 5A). Während der Vorschubbewegung wird die Position des Sägekopfes 14 regelmäßig vom Wegsensor 33 gemessen. Die Vorschubbewegung des Sägekopfes 14 wird angehalten, wenn die Schwenkachse 23 einen Abstand zum zweiten Endpunkt E₂ von √[h₁ · (D₁ - h₁)] + δ · sin(-α₁) aufweist, wobei h₁ = h(-α₁, D₁) = D₁/2 - Δ - δ · cos(-α₁) die Eindringtiefe des verwendeten Sägeblattes 16 in das Werkstück 24 beim negativen ersten Hauptschnittwinkel -α₁ mit dem ersten Durchmesser D₁, der dem Sägeblattdurchmesser D entspricht, bezeichnet. In dieser Position fällt der, dem zweiten Endpunkt E₂ zugewandte, zweite obere Austrittspunkt 59 des Sägeblattes 16 mit dem zweiten Endpunkt E₂ zusammen und der erste Hauptschnitt ist beendet.

Für den zweiten Hauptschnitt wird der Sägekopf 14 in Vorschubrichtung 28 so positioniert, dass die Schwenkachse 23 einen Abstand zum zweiten Endpunkt E₂ von √[h₂ · (D₂ - h₂)] + δ · sin(-α₂) aufweist, wobei h₂ = h(-α₂, D₂) = D₂/2 - Δ - δ · cos(-α₂) die Eindringtiefe des Sägeblattes 16 in das Werkstück 24 beim zweiten negativen Hauptschnittwinkel -α₂ mit dem zweiten Durchmesser D₂, der dem Sägeblattdurchmesser D entspricht, bezeichnet. In dieser Position wird der Sägearm 17 aus dem negativen ersten Hauptschnittwinkel -α₁ in den negativen zweiten Hauptschnittwinkel -α₂ geschwenkt (FIG. 5B). Bei der Positionierung wird der Abstand so eingestellt, dass der, dem zweiten Endpunkt E₂ zugewandte, zweite obere Austrittspunkt 59 des Sägeblattes 16 nach der Schwenkbewegung des Sägearms 17 in den negativen zweiten Hauptschnittwinkel -α₂ mit dem zweiten Endpunkt E₂ zusammenfällt.

In einer alternativen Ausführung (dritte Verfahrensvariante) wird die Vorschubbewegung des Sägekopfes 14 in der positiven Vorschubrichtung 56 angehalten, wenn die Schwenkachse 23 einen Abstand zum zweiten Endpunkt E₂ von √[h₂ · (D₂ - h₂)] + δ · sin(-α₂) aufweist, wobei h₂ = h(-α₂, D₂) = D₂/2 - Δ - δ · cos(-α₂) die Eindringtiefe des verwendeten Sägeblattes in das Werkstück 24 beim negativen zweiten Hauptschnittwinkel -α₂ mit dem zweiten Durchmesser D₂, der dem Sägeblattdurchmesser D entspricht, bezeichnet. In dieser Position wird der Sägearm 17 aus dem negativen ersten Hauptschnittwinkel -α₁ in den negativen zweiten Hauptschnittwinkel -α₂ geschwenkt.

Nach der Schwenkbewegung in den negativen zweiten Hauptschnittwinkel -α₂ wird der Sägekopf 14 in der negativen Vorschubrichtung 57 auf den ersten Endpunkt E₁ zu bewegt, wobei die Position des Sägekopfes 14 während der Vorschubbewegung vom Wegsensor 33 regelmäßig gemessen wird. Die Vorschubbewegung des Sägekopfes 14 wird angehalten, wenn die Schwenkachse 23 einen Abstand von √[h₂ · (D₂ · h₂)] - δ · sin(-α₂) zum ersten Endpunkt E₁ aufweist, wobei h₂ = h(-α₂, D₂) = D₂/2 - Δ - δ · cos(-α₂) die Eindringtiefe des verwendeten Sägeblattes 16 in das Werkstück 24 beim negativen zweiten Hauptschnittwinkel -α₂ mit dem zweiten Durchmesser D₂ bezeichnet. In dieser Position fällt der erste obere Austrittspunkt 58 des Sägeblattes 16 mit dem ersten Endpunkt E₁ zusammen und der zweite Hauptschnitt ist beendet (FIG. 5C).

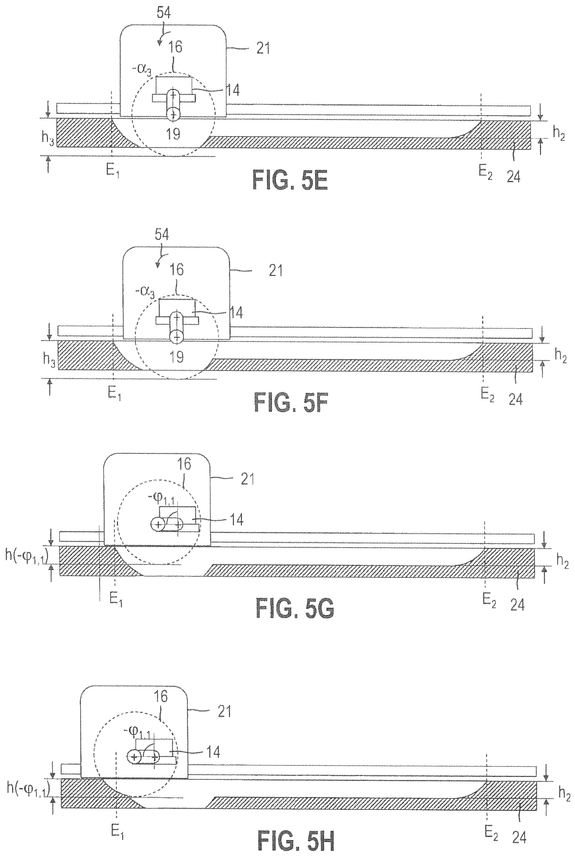

Nach dem zweiten Hauptschnitt wird der Sägekopf 14 in Vorschubrichtung 28 so positioniert, dass die Schwenkachse 23 einen Abstand zum ersten Endpunkt E₁ von √[h₃ · (D₃ - h₃)] - δ · sin(-α₃) aufweist, wobei h₃ = h(-α₃, D₃) = D₃/2 - Δ - δ · cos(-α₃) die Eindringtiefe des verwendeten Sägeblattes 16 in das Werkstück 24 beim negativen dritten Hauptschnittwinkel -α₃ mit dem dritten Durchmesser D₃, der dem Sägeblattdurchmesser D entspricht, bezeichnet (FIG. 5D). In dieser Position wird der Sägearm 17 aus dem negativen zweiten Hauptschnittwinkel - α₂ in den negativen dritten Hauptschnittwinkel -α₃ geschwenkt (FIG. 5E).

Der dritte Hauptschnitt stellt den letzten Hauptschnitt der Hauptschnittfolge dar und vor der Bearbeitung des letzten Hauptschnittes erfolgt eine Überschnittbearbeitung des freien ersten Endpunktes E₁. Vor dem Start der gesteuerten Bearbeitung des Trennschnittes wird die erste Überschnittfolge für den freien ersten Endpunkt E₁ festgelegt. Die erste Überschnittfolge umfasst im Ausführungsbeispiel einen ersten Überschnitt mit einem ersten Überschnittwinkel - <P₁,₁ des Sägearms 17 und einem ersten Durchmesser **D_{1,1}** des verwendeten Sägeblattes sowie einen zweiten Überschnitt mit einem zweiten Überschnittwinkel **-ϕ_{1,2}** des Sägearms 17 und einem zweiten Durchmesser **D_{1,2}** des verwendeten Sägeblattes, wobei der zweite Überschnittwinkel -ϕ_{1,2} dem negativen dritten Hauptschnittwinkel -α₃ entspricht.

Beim Überschnittwinkel kennzeichnet der erste Index, ob die Überschnittbearbeitung am ersten oder zweiten Endpunkt E₁, E₂ erfolgt, wobei der Index "1" für den ersten Endpunkt E₁ und der Index "2" für den zweiten Endpunkt E₂ steht. Der zweite Index kennzeichnet den Schritt und variiert von 1 bis n, n ≥ 2. Die Überschnittbearbeitung des freien ersten Endpunktes E₁ erfolgt mit dem Sägeblatt 16 und die Durchmesser D_{1,1} und D_{1,2} stimmen mit dem Sägeblattdurchmesser D überein.

Vor dem Start der gesteuerten Bearbeitung werden beim erfindungsgemäßen Verfahren zusätzlich eine erste Anfangsposition und eine erste Endposition festgelegt. Die erste Anfangsposition wird so berechnet, dass die Schwenkbewegung in alle Überschnittwinkel -ϕ_{1,1}, -ϕ_{1,2} der ersten Überschnittfolge vor dem ersten Endpunkt E₁ erfolgt und der erste Endpunkt E₁ nicht überschritten wird. In der ersten Endposition weist die Schwenkachse 23 eine Ortskoordinate von X(E₁) + √[Δh · (D₃ - Δh)] - δ · sin(-α₃) auf, wobei Δh = h₃ - T die Differenz zwischen der dritten Eindringtiefe h₃ und der Endtiefe T und h₃ = h(-α₃, D₃) = D₃/2 - Δ - δ · cos(-α₃) die Eindringtiefe des Sägeblattes (16) in das Werkstück (24) beim negativen dritten Hauptschnittwinkel (-α₃) bezeichnen.

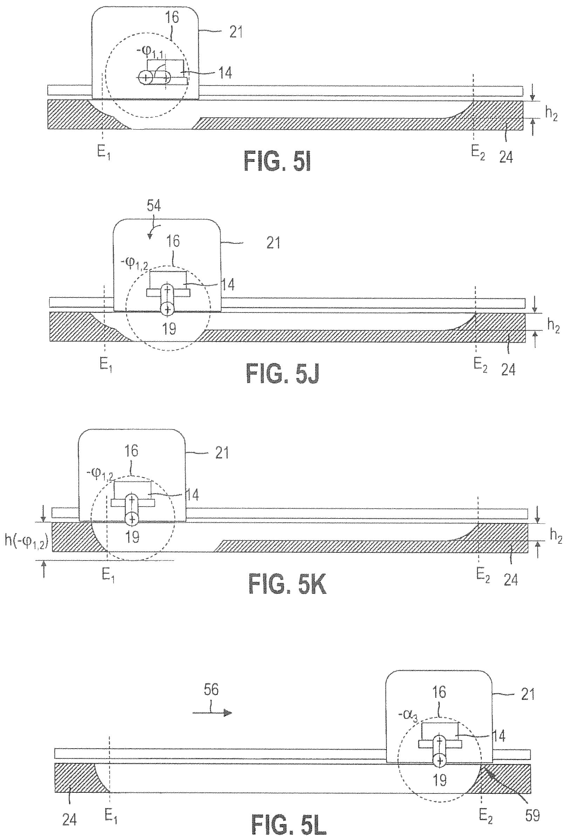

Der Sägearm 17 wird nach der Schwenkbewegung in den negativen dritten Hauptschnittwinkel -α₃ in die erste Anfangsposition verfahren (FIG. 5F) und in der ersten Anfangsposition in den ersten Überschnittwinkel -ϕ_{1,1} geschwenkt (FIG. 5G). Mit dem, unter dem ersten Überschnittwinkel -ϕ_{1,1} geneigten, Sägearm 17 wird der Sägekopf 14 in der negativen Vorschubrichtung 57 verfahren, bis die Schwenkachse 23 die erste Endposition erreicht hat (FIG. 5H). Anschließend wird der Sägekopf 14 in die erste Anfangsposition zurückversetzt (FIG. 5I), der Sägearm 17 in den zweiten Überschnittwinkel -ϕ_{1,2} geschwenkt (FIG. 5J) und der Sägekopf 14 mit dem unter -ϕ_{1,2} geneigten Sägearm 17 in der negativen Vorschubrichtung 57 verfahren, bis die Schwenkachse 23 die erste Endposition erreicht hat (FIG. 5K).

Nach der Überschnittbearbeitung des freien ersten Endpunktes E₁ wird der dritte Hauptschnitt mit dem, unter dem negativen dritten Hauptschnittwinkel -α₃ geneigten, Sägearm 17 in der positiven Vorschubrichtung 56 ausgeführt (FIG. 5L); die Ausführung des dritten Hauptschnittes ist nicht Teil des erfindungsgemäßen Verfahrens. Die Vorschubbewegung des Sägekopfes 14 wird angehalten, wenn die Schwenkachse 23 einen Abstand von √[h₃ · (D₃ - h₃)] + δ · sin(-α₃) zum zweiten Endpunkt E₂ aufweist, wobei h₃ = h(-α₃, D₃) = D₃/2 - Δ - δ · cos(-180°) die Eindringtiefe des verwendeten Sägeblattes 16 in das Werkstück 24 beim negativen dritten Hauptschnittwinkel -α₃ mit dem dritten Durchmesser D₃, der dem Sägeblattdurchmesser D entspricht, bezeichnet.

Die zweite Überschnittfolge umfasst im Ausführungsbeispiel einen ersten Überschnitt mit einem ersten Überschnittwinkel **ϕ_{2,1}** des Sägearms 17 und einem ersten Durchmesser **D_{2,1}** des verwendeten Sägeblattes sowie einen zweiten Überschnitt mit einem zweiten Überschnittwinkel **ϕ_{2,2}** des Sägearms 17 und einem zweiten Durchmesser **D_{2,2}** des verwendeten Sägeblattes, wobei der zweite Überschnittwinkel ϕ_{2,2} dem positiven dritten Hauptschnittwinkel α₃ entspricht. Die Überschnittbearbeitung des freien zweiten Endpunktes E₁ erfolgt mit dem Sägeblatt 16 und die Durchmesser D_{2,1} und D_{2,2} stimmen mit dem Sägeblattdurchmesser D überein.

Vor dem Start der gesteuerten Bearbeitung werden beim erfindungsgemäßen Verfahren zusätzlich eine zweite Anfangsposition und eine zweite Endposition festgelegt. Die zweite Anfangsposition wird so berechnet, dass die Schwenkbewegung in alle Überschnittwinkel ϕ₂₁, ϕ₂₂ der zweiten Überschnittfolge vor dem zweiten Endpunkt E₂ erfolgt und der zweite Endpunkt E₂ nicht überschritten wird. In der zweiten Endposition weist die Schwenkachse 23 eine Ortskoordinate von X(E₂) - √[Δh · (D₃ - Δh)] + δ · sin(-α₃) auf, wobei Δh = h₃ - T die Differenz zwischen der dritten Eindringtiefe h₃ und der Endtiefe T und h₃ = h(-α₃, D₃) = D₃/2 - Δ - δ · cos(-α₃) die Eindringtiefe des verwendeten Sägeblattes 16 in das Werkstück 24 beim negativen dritten Hauptschnittwinkel -α₃ bezeichnen.

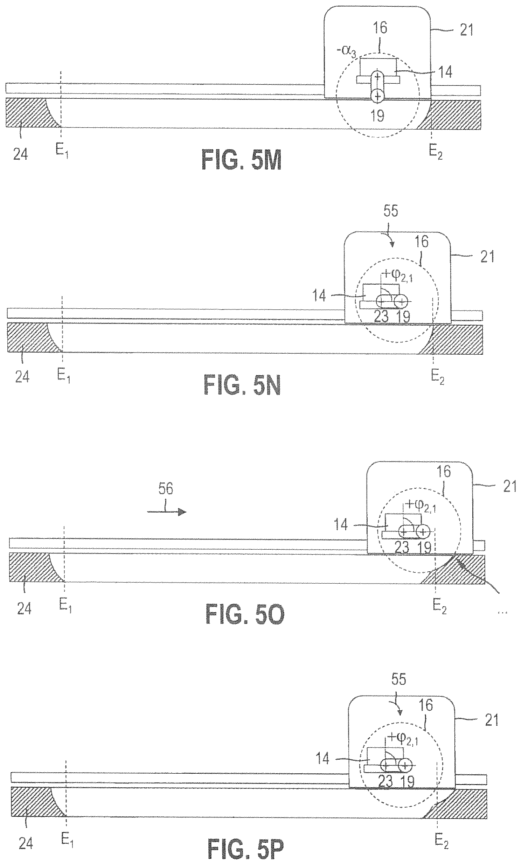

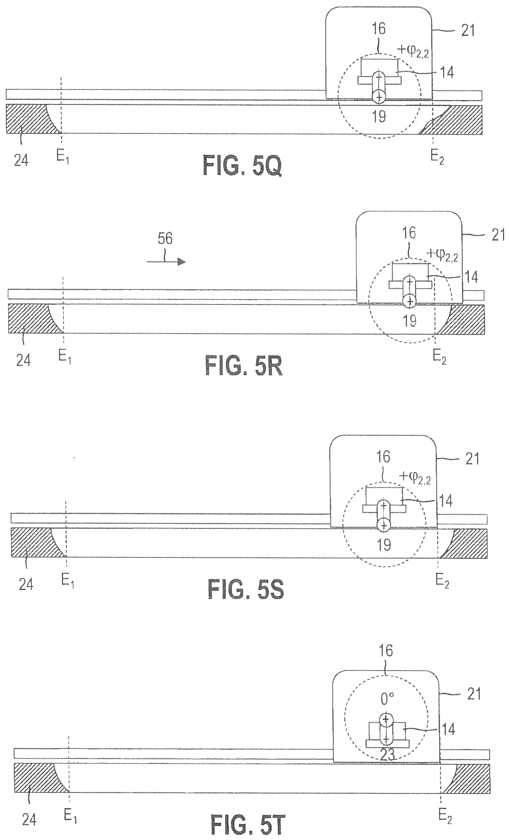

Der Sägekopf 14 wird nach dem Ende des dritten Hauptschnittes in die zweite Anfangsposition verfahren (FIG. 5M) und der Sägearm 17 wird in der zweiten Anfangsposition in den ersten Überschnittwinkel ϕ₂₁ geschwenkt (FIG. 5N). Mit dem, unter dem ersten Überschnittwinkel ϕ₂₁ geneigten, Sägearm 17 wird der Sägekopf 14 in der positiven Vorschubrichtung 56 verfahren, bis die Schwenkachse 23 die zweite Endposition erreicht hat (FIG. 5O). Nach dem Abtragen im ersten Überschnitt wird der Sägekopf 14 in die zweite Anfangsposition zurückversetzt (FIG. 5P), der Sägearm 17 in der zweiten Anfangsposition in den zweiten Überschnittwinkel ϕ₂₂ geschwenkt (FIG. 5Q) und der Sägekopf 14 mit dem geneigten Sägearm 17 in der positiven Vorschubrichtung 56 in die zweite Endposition verfahren (FIG. 5R). Der Sägekopf 14 wird nach dem Ende der zweiten Überschnittfolge in eine Parkposition verfahren (FIG. 5S) und der Sägearm 17 in der Parkposition aus dem zweiten Überschnittwinkel ϕ₂₂ in die Grundposition bei 0° geschwenkt (FIG. 5T).

Im Ausführungsbeispiel der FIGN. 5A-T wurden die Schwenkbewegungen vom negativen ersten Hauptschnittwinkel -α₁ in den negativen zweiten Hauptschnittwinkel -α₂ und vom negativen zweiten Hauptschnittwinkel -α₂ in den negativen dritten Hauptschnittwinkel -α₃ in einem Schritt ausgeführt. Alternativ kann die Schwenkbewegung in den negativen zweiten Hauptschnittwinkel -α₂ oder in den negativen dritten Hauptschnittwinkel -α₃ in mehreren Schritten mit Zwischenwinkeln erfolgen; die Schwenkbewegung des Sägearms 17 in mindestens zwei Schritten mit einem Zwischenwinkel auszuführen, ist nicht Teil des erfindungsgemäßen Verfahrens. Die Entscheidung, wie viele Schritte erforderlich sind, hängt unter anderem von der Spezifikation des Sägeblattes 16, den Werkstoffeigenschaften des Werkstückes 24 sowie der Leistung und dem Drehmoment des Antriebsmotors 18 für das Sägeblatt ab. Die Zwischenwinkel können vom Bediener festgelegt werden oder die Kontrolleinheit 29 der Wandsäge 12 legt die Zwischenwinkel abhängig von verschiedenen Randbedingungen fest. Für die Hauptschnittfolge stellen die Hauptschnittwinkel der Hauptschritte und mögliche Zwischenwinkel eine Eingangsgröße dar, die zur Steuerung der Wandsäge 12 genutzt wird.

Die erste Überschnittfolge für den freien ersten Endpunkt E₁ und die zweite Überschnittfolge für den freien zweiten Endpunkt E₂ weisen jeweils zwei Überschnitte auf. Alternativ können die Überschnittfolgen mehr als zwei Überschnitte aufweisen.

## Patentansprüche

1. Verfahren zur Steuerung eines Wandsägesystems (10) umfassend eine Führungsschiene (11) und eine Wandsäge (12) mit einem Sägekopf (14), einer motorischen Vorschubeinheit (15), die den Sägekopf (14) parallel zu einer Vorschubrichtung (28) entlang der Führungsschiene (11) verschiebt, mindestens einem Sägeblatt (16), das an einem, um eine Schwenkachse (23) schwenkbaren, Sägearm (17) des Sägekopfes (14) befestigt und um eine Drehachse (19) angetrieben wird, und mindestens einem, das Sägeblatt (16) umgebenden, lösbaren Blattschutz (21) beim Erstellen eines Trennschnittes (51) der Endtiefe (T) in einem Werkstück (24) der Werkstückdicke (d) zwischen einem ersten Endpunkt (E₁) und einem zweiten Endpunkt (E₂), wobei mindestens einer der Endpunkte als freier Endpunkt (E₁, E₂) mit Überschneiden definiert ist, mit:
▪ vor dem Start einer von einer Kontrolleinheit (29) der Wandsäge (12) gesteuerten Bearbeitung werden zumindest der Sägeblattdurchmesser (D) des mindestens einen Sägeblattes (16), die Positionen des ersten und zweiten Endpunktes (E₁, E₂) in Vorschubrichtung (28), die Endtiefe (T) des Trennschnittes (51) und eine Hauptschnittfolge von m Hauptschnitten, m ≥ 2 zwischen dem ersten und zweiten Endpunkt (E₁, E₂) bestimmt, wobei die Hauptschnittfolge zumindest einen vorletzten Hauptschnitt mit einem vorletzten Hauptschnittwinkel (αₘ₋₁) des Sägearms (17) und einem vorletzten Durchmesser (Dₘ₋₁) des verwendeten Sägeblattes sowie einen letzten Hauptschnitt mit einem letzten Hauptschnittwinkel (αₘ) des Sägearms (17) und einem letzten Durchmesser (Dₘ) des verwendeten Sägeblattes umfasst,
▪ während der von der Kontrolleinheit (29) gesteuerten Bearbeitung werden
- der vorletzte Hauptschnitt mit dem unter dem vorletzten Hauptschnittwinkel (±αₘ₋₁), geneigten Sägearm (17) durchgeführt und
- der letzte Hauptschnitt mit dem, unter dem letzten Hauptschnittwinkel (±αₘ), geneigten Sägearm (17) durchgeführt,
▪ vor dem Start der von der Kontrolleinheit (29) gesteuerten Bearbeitung wird zusätzlich zur Hauptschnittfolge für den mindestens einen freien Endpunkt (E₁, E₂) mit Überschneiden eine Überschnittfolge mit Überschnitten festgelegt, wobei die Überschnittfolge zumindest einen ersten Überschnitt mit einem ersten Überschnittwinkel (±ϕ_{1,1}, ±ϕ_{2,1}) des Sägearms (17) und einem ersten Durchmesser (D_{1,1}, D_{2,1}) des verwendeten Sägeblattes sowie einen zweiten Überschnitt mit einem zweiten Überschnittwinkel (±ϕ_{1,2}, ±ϕ_{2,2}) des Sägearms (17) und einem zweiten Durchmesser (D_{1,1}, D_{2,2}) des verwendeten Sägeblattes umfasst,
**dadurch gekennzeichnet, dass** während der von der Kontrolleinheit (29) gesteuerten Bearbeitung die Überschnittfolge zwischen dem vorletzten Hauptschnitt und letzten Hauptschnitt durchgeführt wird oder die Überschnittfolge nach dem letzten Hauptschnitt durchgeführt wird und vor dem Start der von der Kontrolleinheit (29) gesteuerten Bearbeitung für die Überschnittfolge zusätzlich eine Anfangsposition und eine Endposition festgelegt werden.

2. Verfahren nach Anspruch 1, **dadurch gekennzeichnet, dass** die Überschnittfolge eine Anzahl von n Überschnitten, n ≥ 2 mit j-ten Überschnittwinkeln (±ϕ_{1,j}, ±ϕ_{2,j}) des Sägearms (17) und j-ten Durchmessern (D_{1,j}, D_{2,j}) des verwendeten Sägeblattes, j = 1 bis n umfasst.

3. Verfahren nach Anspruch 1, **dadurch gekennzeichnet, dass** vor dem Start der von der Kontrolleinheit (29) gesteuerten Bearbeitung zusätzlich eine Sägearmlänge (δ) des Sägearms (17), die als Abstand zwischen der Schwenkachse (23) des Sägearms (17) und der Drehachse (19) des Sägeblattes (16) definiert ist, und ein Abstand (Δ) zwischen der Schwenkachse (23) und einer Oberseite (53) des Werkstückes (24) festgelegt werden.

4. Verfahren nach Anspruch 3, **dadurch gekennzeichnet, dass** der erste Endpunkt (E₁) als freier Endpunkt mit Überschneiden definiert ist und für die Überschnittfolge von der Kontrolleinheit (29) eine erste Endposition berechnet wird, wobei die Schwenkachse (23) in der ersten Endposition eine Ortskoordinate von X(E₁) + √[Δh (Dₘ - Δh)] - δ sin(±αₘ) aufweist, wobei Δh = (hₘ - T) die Differenz zwischen der Eindringtiefe (hₘ) beim letzten Hauptschnittwinkel (±αₘ) und der Endtiefe (T) und hₘ = h(±αₘ, Dₘ) = Dₘ/2 - Δ - δ · cos(±αₘ) die Eindringtiefe des Sägeblattes (16) in das Werkstück (24) beim letzten Hauptschnittwinkel (±αₘ) bezeichnen.

5. Verfahren nach Anspruch 4, **dadurch gekennzeichnet, dass** im j-ten Überschnitt der Überschnittfolge, j = 1 bis n der Sägekopf (14) in eine erste Anfangsposition positioniert wird, der Sägearm (17) in der ersten Anfangsposition in den j-ten Überschnittwinkel (±ϕ_{1,j}) geschwenkt wird und der Sägekopf (14) mit dem, im j-ten Überschnittwinkel (±ϕ_{1,j}), geneigten Sägearm (17) in die erste Endposition verfahren wird.

6. Verfahren nach Anspruch 5, **dadurch gekennzeichnet, dass** die Schwenkachse (23) in der ersten Anfangsposition eine Ortskoordinate von X(E₁) + √[h(±ϕ_{1,n}} · (D_{1,n} - h(±ϕ_{1,n}))] - δ · sin(±ϕ_{1,n}) für 0° < ϕ_{1,n} ≤ 90° und X(E₁) + √[h(±ϕ_{1,n}) (D_{1,n} - h(±ϕ_{1,n}))] - δ · sin(±90°) für 90° < ϕ_{1,n} ≤ 180° aufweist, wobei h(±ϕ_{1,n}, D_{1,n}) = D_{1,n}/2 - Δ - δ · cos(±ϕ_{1,n}) die Eindringtiefe des verwendeten Sägeblattes in das Werkstück (24) beim n-ten Überschnittwinkel (±ϕ_{1,n}) bezeichnet.

7. Verfahren nach Anspruch 3, **dadurch gekennzeichnet, dass** der zweite Endpunkt (E₂) als freier Endpunkt mit Überschneiden definiert ist und für die Überschnittfolge von der Kontrolleinheit (29) eine zweite Endposition berechnet wird, wobei die Schwenkachse (23) in der zweiten Endposition eine Ortskoordinate von X(E₂) - √[Δh (Dₘ - Δh)] + δ sin(±αₘ) aufweist, wobei Δh = (hₘ - T) die Differenz zwischen der Eindringtiefe (hₘ) beim letzten Hauptschnittwinkel (±αₘ) und der Endtiefe (T) und hₘ = h(±αₘ, Dₘ) = Dₘ/2 - Δ - δ cos(±αₘ) die Eindringtiefe des verwendeten Sägeblattes in das Werkstück (24) beim letzten Hauptschnittwinkel (±αₘ) bezeichnen.

8. Verfahren nach Anspruch 7, **dadurch gekennzeichnet, dass** im j-ten Überschnitt der Überschnittfolge, j = 1 bis n der Sägekopf (14) in eine zweite Anfangsposition positioniert wird, der Sägearm (17) in der zweiten Anfangsposition in den j-ten Überschnittwinkel (±ϕ_{2,j}) geschwenkt wird und der Sägekopf (14) mit dem, im j-ten Überschnittwinkel (±ϕ_{2,j}), geneigten Sägearm (17) in die zweite Endposition verfahren wird.

9. Verfahren nach Anspruch 8, **dadurch gekennzeichnet, dass** die Schwenkachse (23) in der zweiten Anfangsposition eine Ortskoordinate von X(E₂) - √[h(±ϕ_{2,n}) · (D_{2,n} - h(±ϕ_{2,n}))] - δ · sin(±ϕ_{2,n}) für 0° < ϕ_{2,n} ≤ 90° und X(E₂) - √(h(±ϕ_{2,n}) (D_{2,n} - h(±ϕ_{2,n}))] - δ · sin(±90°) für 90° < ϕ_{2,n} ≤ 180° aufweist, wobei h(±ϕ_{2,n}, D_{2,n}) = D₂ₙ/2 - Δ - δ · cos(±ϕ_{2,n}) die Eindringtiefe des verwendeten Sägeblattes in das Werkstück (24) beim n-ten Überschnittwinkel (±ϕ_{2,n}) bezeichnet.

## Claims

1. Method for controlling a wall-saw system (10) comprising a guide rail (11) and a wall saw (12) with a saw head (14), with a motorized feed unit (15) which displaces the saw head (14) parallel to a feed direction (28) along the guide rail (11), with at least one saw blade (16) which is fastened to a saw arm (17), pivotable about a pivot axis (23), of the saw head (14) and is driven about an axis of rotation (19), and with at least one releasable blade guard (21), surrounding the saw blade (16), when producing a separating cut (51) of an end depth (T) in a workpiece (24) of the workpiece thickness (d) between a first end point (E₁) and a second end point (E₂), wherein at least one of the end points is defined as a free end point (E₁, E₂) with overcutting, comprising:
▪ before the start of a machining operation that is controlled by a control unit (29) of the wall saw (12), at least the saw-blade diameter (D) of the at least one saw blade (16), the positions of the first and second end points (E₁, E₂) in the feed direction (28), the end depth (T) of the separating cut (51) and a main-cut sequence of m main cuts, where m ≥ 2, between the first and second end points (E₁, E₂) are determined, wherein the main-cut sequence comprises at least a penultimate main cut with a penultimate main-cut angle (αₘ₋₁) of the saw arm (17) and a penultimate diameter (Dₘ₋₁) of the saw blade used, and a last main cut with a last main-cut angle (αₘ) of the saw arm (17) and a last diameter (Dₘ) of the saw blade used,
▪ during the machining operation controlled by the control unit (29),
- the penultimate main cut is carried out with the saw arm (17) tilted at the penultimate main-cut angle (±αₘ₋₁), and
- the last main cut is carried out with the saw arm (17) tilted at the last main-cut angle (±αₘ),
▪ before the start of the machining operation controlled by the control unit (29), in addition to the main-cut sequence for the at least one free end point (E₁, E₂) with overcutting, an overcut sequence with overcuts is specified, wherein the overcut sequence has at least one first overcut with a first overcut angle (±ϕ_{1,1}, ±ϕ_{2,1}) of the saw arm (17) and a first diameter (D_{1,1}, D_{2,1}) of the saw blade used and a second overcut with a second overcut angle (±ϕ_{1,2}, ±ϕ_{2,2}) of the saw arm (17) and a second diameter (D_{1,1}, D_{2,2}) of the saw blade used,
**characterized in that**, during the machining operation controlled by the control unit (29), the overcut sequence is carried out between the penultimate main cut and the last main cut, or the overcut sequence is carried out after the last main cut and, before the start of the machining operation controlled by the control unit (29), a starting position and an end position are additionally specified for the overcut sequence.

2. Method according to Claim 1, **characterized in that** the overcut sequence comprises a number of n overcuts, where n ≥ 2, with j-th overcut angles (±ϕ_{1,j}, ±ϕ_{2,j}) of the saw arm (17) and j-th diameters (D_{1,j}, D_{2,j}) of the saw blade used, where j = 1 to n.

3. Method according to Claim 1, **characterized in that**, before the start of the machining operation controlled by the control unit (29), a saw arm length (δ) of the saw arm (17), which is defined as the distance between the pivot axis (23) of the saw arm (17) and the axis of rotation (19) of the saw blade (16), and a distance (Δ) between the pivot axis (23) and an upper side (53) of the workpiece (24) are additionally specified.

4. Method according to Claim 3, **characterized in that** the first end point (E₁) is defined as a free end point with overcutting and a first end position is calculated for the overcut sequence by the control unit (29), wherein the pivot axis (23) in the first end position has a location coordinate of X(E₁) + √[Δh (Dₘ - Δh)] - δ · sin(±αₘ), where Δh = (hₘ - T) denotes the difference between the penetration depth (hₘ) at the last main-cut angle (±αₘ) and the final depth (T), and hₘ = h(±αₘ, Dₘ) = Dₘ/2 - Δ - δ · cos(±αₘ) denotes the penetration depth of the saw blade (16) into the workpiece (24) at the last main-cut angle (±αₘ).

5. Method according to Claim 4, **characterized in that**, in the j-th overcut of the overcut sequence, where j = 1 to n, the saw head (14) is positioned into a first starting position, the saw arm (17) in the first starting position is pivoted into j-th overcut angle (±ϕ_{1,j}), and the saw head (14) is moved into the first end position with the saw arm (17) tilted at the j-th overcut angle (±ϕ_{1,j}).

6. Method according to Claim 5, **characterized in that** the pivot axis (23) in the first starting position has a location coordinate of X(E₁) + √[h(±ϕ_{1,n}) · (D_{1,n} - h(±ϕ_{1,n)})] - δ · sin(±ϕ_{1,n}) for 0° < ϕ_{1,n} ≤ 90° and X(E₁) + √[h(±ϕ_{1,n}) (D_{1,n} - h(±ϕ_{1,n)})] - δ · sin(±90°) for 90° < ϕ_{1,n} ≤ 180°, wherein h(±ϕ_{1,n}, D_{1,n}) = D_{1,n}/2 - Δ - δ · cos(±ϕ_{1,n}) denotes the penetration depth of the saw blade used into the workpiece (24) at the n-th overcut angle (±ϕ_{1,n}).

7. Method according to Claim 3, **characterized in that** the second end point (E₂) is defined as a free end point with overcutting and a second end position is calculated for the overcut sequence by the control unit (29), wherein the pivot axis (23) in the second end position has a location coordinate of X(E₂) - √[Δh (Dₘ - Δh)] + δ · sin(±αₘ), where Δh = (hₘ - T) denotes the difference between the penetration depth (hₘ) at the last main-cut angle (±αₘ) and the final depth (T), and hₘ = h(±αₘ, Dₘ) = Dₘ/2 - Δ - δ · cos(±αₘ) denotes the penetration depth of the saw blade used into the workpiece (24) at the last main-cut angle (±αₘ).

8. Method according to Claim 7, **characterized in that**, in the j-th overcut of the overcut sequence, where j = 1 to n, the saw head (14) is positioned into a second starting position, the saw arm (17) in the second starting position is pivoted into the j-th overcut angle (±ϕ_{2,j}), and the saw head (14) is moved into the second end position with the saw arm (17) tilted at the j-th overcut angle (±ϕ_{2,j}).

9. Method according to Claim 8, **characterized in that** the pivot axis (23) in the second starting position has a location coordinate of X(E₂) - √[h(±ϕ_{2,n}) · (D_{2,n} - h(±ϕ_{2,n}))] - δ · sin(±ϕ_{2,n}) for 0° < ϕ_{2,n} ≤ 90° and X(E₂) - √[h(±ϕ_{2,n}) (D_{2,n} - h(±ϕ_{2,n}))] - δ · sin(±90°) for 90° < ϕ_{2,n} ≤ 180°, wherein h(±ϕ_{2,n}, D_{2,n}) = D₂ₙ/2 - Δ - δ · cos(±ϕ_{2,n}) denotes the penetration depth of the saw blade used into the workpiece (24) at the n-th overcut angle (±ϕ_{2,n}).

## Revendications

1. Procédé de commande d'un système de scie murale (10), comprenant un rail de guidage (11) et une scie murale (12) avec une tête de scie (14), une unité d'avance motorisée (15) qui déplace la tête de scie (14) parallèlement à une direction d'avance (28) le long du rail de guidage (11), au moins une lame de scie (16) qui est fixée à un bras de scie (17) de la tête de scie (14) pouvant pivoter autour d'un axe de pivotement (23) et est entraînée autour d'un axe de rotation (19), et au moins un protège-lame (21) amovible entourant la lame de scie (16) lors de la création d'une coupe de séparation (51) de la profondeur d'extrémité (T) dans une pièce (24) de l'épaisseur de pièce (d) entre un premier point d'extrémité (E₁) et un deuxième point d'extrémité (E₂), au moins l'un des points d'extrémité étant défini comme un point d'extrémité libre (E₁, E₂), avec surcoupe, avec :
▪ avant le début d'un traitement commandé par une unité de contrôle (29) de la scie murale (12), on détermine au moins le diamètre de lame de scie (D) de l'au moins une lame de scie (16), les positions des premier et deuxième points d'extrémité (E₁, E₂) dans la direction d'avance (28), la profondeur d'extrémité (T) de la coupe de séparation (51) et une séquence de coupes principales de m coupes principales, m ≥ 2, entre le premier et le deuxième point d'extrémité (E₁, E₂), la séquence de coupes principales comprenant au moins une avant-dernière coupe principale avec un avant-dernier angle de coupe principale (αₘ₋₁) du bras de scie (17) et un avant-dernier diamètre (Dₘ₋₁) de la lame de scie utilisée, et une dernière coupe principale avec un dernier angle de coupe principale (αₘ) du bras de scie (17) et un dernier diamètre (Dₘ) de la lame de scie utilisée,
▪ pendant le traitement commandé par l'unité de contrôle (29)
- l'avant-dernière coupe principale est réalisée avec le bras de scie (17) incliné à l'avant-dernier angle de coupe principale (±αₘ₋₁), et
- la dernière coupe principale est réalisée avec le bras de scie (17) incliné au dernier angle de coupe principale (±αₘ),
▪ avant le début du traitement commandé par l'unité de contrôle (29), en plus de la séquence de coupes principales pour l'au moins un point d'extrémité libre (E₁, E₂) avec surcoupe, une séquence de surcoupes avec des surcoupes est définie, la séquence de surcoupes comprenant au moins une première surcoupe avec un premier angle de surcoupe (±ϕ_{1,1}, ±ϕ_{2,1}) du bras de scie (17) et un premier diamètre (D_{1,1}, D_{2,1}) de la lame de scie utilisée, et une deuxième surcoupe avec un deuxième angle de surcoupe (±ϕ_{1,2}, ±ϕ_{2,2}) du bras de scie (17) et un deuxième diamètre (D_{1,1}, D_{2,2}) de la lame de scie utilisée, **caractérisé en ce que**, pendant le traitement commandé par l'unité de contrôle (29), la séquence de surcoupes est réalisée entre l'avant-dernière coupe principale et la dernière coupe principale ou la séquence de surcoupes est réalisée après la dernière coupe principale et, avant le début du traitement commandé par l'unité de contrôle (29), une position initiale et une position finale sont en outre établies pour la séquence de surcoupes.

2. Procédé selon la revendication 1, **caractérisé en ce que** la séquence de surcoupes comprend un nombre de n surcoupes, n ≥ 2 avec j-ème angles de surcoupe (±ϕ_{1,j}, ±ϕ_{2,j}) du bras de scie (17) et j-ème diamètres (D_{1,j}, D_{2,j}) de la lame de scie utilisée, j = 1 à n.

3. Procédé selon la revendication 1, **caractérisé en ce qu'**avant le début du traitement commandé par l'unité de contrôle (29), on établit en outre une longueur de bras de scie (δ) du bras de scie (17), qui est définie comme étant la distance entre l'axe de pivotement (23) du bras de scie (17) et l'axe de rotation (19) de la lame de scie (16), et une distance (Δ) entre l'axe de pivotement (23) et un côté supérieur (53) de la pièce (24).

4. Procédé selon la revendication 3, **caractérisé en ce que** le premier point d'extrémité (E₁) est défini comme un point d'extrémité libre avec surcoupe et une première position finale est calculée pour la séquence de surcoupes par l'unité de contrôle (29), l'axe de pivotement (23) ayant une coordonnée de lieu dans la première position finale de X(E₁) + √[Δh (Dₘ - Δh)] - δ · sin(±αₘ), où Δh = (hₘ - T) désigne la différence entre la profondeur de pénétration (hₘ) au dernier angle de coupe principale (±αₘ) et la profondeur finale (T) et hₘ = h(±αₘ, Dₘ) = Dₘ/2 - Δ - δ · cos(±αₘ) désigne la profondeur de pénétration de la lame de scie (16) dans la pièce (24) au dernier angle de coupe principale (±αₘ).

5. Procédé selon la revendication 4, **caractérisé en ce que** dans la j-ème surcoupe de la séquence de surcoupes, j = 1 à n, la tête de scie (14) est positionnée dans une première position initiale, le bras de scie (17) est pivoté au j-ème angle de surcoupe (±ϕ_{1,j}) et la tête de scie (14) est déplacée avec le bras de scie (17) incliné au j-ème angle de surcoupe (±ϕ_{i,j}) dans la première position finale.

6. Procédé selon la revendication 5, **caractérisé en ce que** l'axe de pivotement (23) présente, dans la première position initiale, une coordonnée de lieu de X(E₁) + √[h(±ϕ_{1,n}) · (D_{1,n} - h(±ϕ_{1,n}))] - δ · sin(±ϕ_{1,n}) pour 0° < ϕ_{1,n} ≤ 90° et X(E₁) + √[h(±ϕ_{1,n}) (D_{1,n} - h(±ϕ_{1,n}))] - δ · sin(±90°) pour 90° < ϕ_{1,n} ≤ 180°, où h(±ϕ_{1,n}, D_{1,n}) = D_{1,n}/2 - Δ - δ · cos(±ϕ_{1,n}) désigne la profondeur de pénétration de la lame de scie utilisée dans la pièce (24) au n-ème angle de surcoupe (±ϕ_{1,n}).

7. Procédé selon la revendication 3, **caractérisé en ce que** le deuxième point d'extrémité (E₂) est défini comme un point d'extrémité libre avec surcoupe et une deuxième position finale est calculée pour la séquence de surcoupes par l'unité de contrôle (29), l'axe de pivotement (23) ayant une coordonnée de lieu dans la deuxième position finale de X(E₂) - √[Δh (Dₘ - Δh)] + δ · sin(±αₘ), où Δh = (hₘ - T) désigne la différence entre la profondeur de pénétration (hₘ) au dernier angle de coupe principale (±αₘ) et la profondeur finale (T) et hₘ = h(±αₘ, Dₘ) = Dₘ/2 - Δ - δ · cos(±αₘ) désigne la profondeur de pénétration de la lame de scie utilisée dans la pièce (24) au dernier angle de coupe principale (±αₘ).

8. Procédé selon la revendication 7, **caractérisé en ce que** dans la j-ème surcoupe de la séquence de surcoupes, j = 1 à n, la tête de scie (14) est positionnée dans une deuxième position initiale, le bras de scie (17) est pivoté au j-ème angle de surcoupe (±ϕ_{2,j}) dans la deuxième position initiale et la tête de scie (14) est déplacée avec le bras de scie (17) incliné au j-ème angle de surcoupe (±ϕ_{2,j}) dans la deuxième position finale.

9. Procédé selon la revendication 8, **caractérisé en ce que** l'axe de pivotement (23) présente, dans la première position initiale, une coordonnée de lieu de X(E₂) - √[h(±ϕ_{2,n}) · (D_{2,n} - h(±ϕ_{2,n}))] - δ · sin(±ϕ_{2,n}) pour 0° < ϕ_{2,n} ≤ 90° et X(E₂) - √[h(±ϕ_{2,n}) (D_{2,n} - h(±ϕ_{2,n}))] - δ · sin(±90°) pour 90° < ϕ_{2,n} ≤ 180°, où h(±ϕ_{2,n}, D_{2,n}) = D₂ₙ/2 - Δ - δ · cos(±ϕ_{2,n}) désigne la profondeur de pénétration de la lame de scie utilisée dans la pièce (24) au n-ème angle de surcoupe (±ϕ_{2,n}).
